# EUROPÄISCHE PATENTSCHRIFT

(11) **EP 3 834 980 B1**
(45) Veröffentlichungstag und Bekanntmachung des Hinweises auf die Patenterteilung: **22.02.2023**
(21) Anmeldenummer: 19214787.4
(22) Anmeldetag: 10.12.2019
(51) Int. Cl.: B23K 35/00, B23K 35/368, B23K 35/365, B23K 35/36, B23K 35/26, B23K 35/22

(54) **LOTPASTE**
SOLDER PASTE
PÂTE À BRASSAGE

(43) Veröffentlichungstag der Anmeldung: 16.06.2021
(73) Patentinhaber: Heraeus Deutschland GmbH & Co. KG, 63450 Hanau (DE)
(72) Erfinder: WANG, Lei, 63450 Hanau (DE); FRITZSCHE, Dr. Sebastian, 63450 Hanau (DE)
(74) Vertreter: Heraeus IP

(56) Entgegenhaltungen:
- EP-A1- 1 897 652
- EP-A1- 2 623 253
- EP-A1- 2 886 245
- EP-A1- 3 089 844
- EP-A1- 3 321 025
- EP-A1- 3 335 829
- EP-A2- 1 317 991
- WO-A1-98/21264
- DE-A1-102018 112 982
- US-A1- 2003 168 123
- US-B1- 6 592 020

## Beschreibung

Die vorliegende Erfindung betrifft eine Lotpaste insbesondere für das Befestigen von elektronischen Bauteilen auf Substraten.

Lotpasten, insbesondere Weichlotpasten, finden vor allem in der Fertigung von elektronischen Schaltungen Anwendung und dienen der Herstellung einer mechanischen, elektrischen und thermischen Verbindung zwischen einem elektronischen Bauteil und einem Substrat, genauer gesagt zwischen dafür vorgesehenen Kontaktflächen derselben.

Beispiele für elektronische Bauteile im Sinne der vorliegenden Patentanmeldung umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen, und dergleichen.

Beispiele für Substrate im Sinne der vorliegenden Patentanmeldung umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Üblicherweise wird das elektronische Bauteil über die Lotpaste mit dem Substrat in Kontakt bzw. auf dieses aufgebracht. Die Lotpaste wird erwärmt, um das Lot in der Paste durch einen Reflow-Prozess aufzuschmelzen, wodurch der Kontakt zwischen dem elektronischen Bauteil und dem Substrat gebildet wird. Nach dem Abkühlen und Erstarren des Lots sind elektronisches Bauteil und Substrat fest miteinander verbunden.

Lotpasten enthalten in der Regel Flussmittel, die unter anderem dazu dienen, die Oxidschicht auf den Oberflächen des Lotpulvers, des Bauteils und des Substrates aufzulösen und so für eine bessere Benetzbarkeit beim Lötprozess zu sorgen. Da Lotpasten in der automatischen Fertigung von elektronischen Schaltungen überwiegend im Sieb- und Schablonendruck verarbeitet werden, enthalten die Flussmittel in der Regel zusätzlich Substanzen, wie beispielsweise Tenside und Additive, die die rheologischen Eigenschaften des Flussmittels, und damit der Lotpaste, verbessern.

Nach dem Lötprozess verbleiben dem Flussmittel entstammende Lötrückstände auf den elektronischen Baugruppen, die im Falle sogenannter No-clean-Lotpasten nicht von den gelöteten Baugruppen entfernt werden müssen. Allerdings besteht die Tendenz zur von den Lötstellen ausgehender Elektromigration und/oder Dendritenbildung mit der Folge unerwünschter Kurzschlussbildung. Gerade im Zuge fortschreitender Miniaturisierung kommt dem Problem der Elektromigration und/oder Dendritenbildung steigende Bedeutung zu wegen der damit verbundenen zunehmenden Nähe elektronischer Bauteile, die elektrisch isoliert voneinander bleiben müssen.

EP 3 335 829 A1 beschreibt eine Flussmittelzusammensetzung zur Verwendung in einer Lotpastenzusammensetzung. Die Flussmittelzusammensetzung umfasst Basisharz, Aktivator und Paraffinwachs umfassend Isoparaffin und/oder Cycloparaffin. Als Aktivator wird Carbonsäure vorgeschlagen. Die Lotpaste besteht aus dem Flussmittel und einem Lotlegierungspulver auf Zinnbasis.

EP 2 623 253 A1 beschreibt eine Lotpaste umfassend ein Lotlegierungspulver auf Zinnbasis und ein Flussmittel, welches Aminhalogensalz und eine Dicarbonsäure enthält. Das Flussmittel kann 30 bis 50 Gew.-% Kolophoniumharz enthalten.

EP 3 089 844 A1 beschreibt ein Flussmittel für eine Epoxid-Lotpaste. Das Flussmittel umfasst 20 bis 40 Gew.-% organisches hochsiedendes Lösungsmittel, 5 bis 15 Gew.-% Epoxidharz vom multifunktionellen Typ, 15 bis 30 Gew.-% Epoxidharz mit hohem Molekulargewicht, 15 bis 30 Gew.-% phenolische Gruppen enthaltendes Härtungsmittel, 10 bis 20 Gew.-% Carbonsäure als Aktivator und 2 bis 8 Gew.-% substituierten aromatischen Amin-Katalysator. Die Lotlegierung selbst basiert auf Zinn.

Aufgabe der Erfindung ist die Bereitstellung einer No-Clean-Lotpaste mit verringerter oder ohne Tendenz zur Elektromigration und/oder Dendritenbildung von aus ihr gebildeten Lötstellen.

Die Anmelderin konnte eine die Aufgabe lösende Lotpaste mit einem neuen, speziell zusammengesetzten Flussmittel entwickeln, welches sich auszeichnet durch die gleichzeitige Anwesenheit mindestens zweier sich hinsichtlich ihrer gewichtsmittleren Molmasse (M_{w}) voneinander unterscheidender Naturharze, welche gegebenenfalls modifiziert sein können.

Dementsprechend besteht die Erfindung in der Bereitstellung einer Lotpaste bestehend aus 85 bis 92 Gew.-% (Gewichts-%) eines Lots auf Zinnbasis und 8 bis 15 Gew.-% eines Flussmittels, dadurch gekennzeichnet, dass das Flussmittel
i) 30 bis 50 Gew.-%, bezogen auf sein Gesamtgewicht, einer Kombination mindestens zweier gegebenenfalls modifizierter Naturharze,
ii) 5 bis 20 Gew.-%, bezogen auf sein Gesamtgewicht, mindestens einer niedermolekularen Carbonsäure; und
iii) 0,4 bis 10 Gew.-%, bezogen auf sein Gesamtgewicht, mindestens eines Amins umfasst, wobei die Kombination der gegebenenfalls modifizierten Naturharze eine integrale Molmassenverteilung aus 45 bis 70 Flächen-% im Molmassenbereich von 150 bis 550 und aus 30 bis 55 Flächen-% im Molmassenbereich von >550 bis 10000 im gemeinsamen GPC (Gelpermeationschromatogramm) aufweist,

wobei das Lot eine mindestens 80 Gew.-% Zinn umfassende Lotlegierung ist,
wobei die mindestens eine niedermolekulare Carbonsäure ausgewählt ist aus der Gruppe bestehend aus Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure, und
wobei die mindestens zwei gegebenenfalls modifizierten Naturharze sich hinsichtlich ihrer gewichtsmittleren Molmasse M_{w} unterscheiden.

Ein GPC, so auch das erwähnte gemeinsame GPC in Gestalt einer integralen Molmassenverteilung, kann in üblicher dem Fachmann bekannter Weise aufgenommen werden, beispielsweise gemäß DIN 55672-1 (März 2016) unter Verwendung von vernetztem Polystyrol als immobile Phase, von Tetrahydrofuran als flüssige Phase und von Polystyrol-Standards, bei einer Temperatur von 23°C.

Sofern nicht anders vermerkt, handelt es sich bei allen in dieser Patentanmeldung zitierten Normen jeweils um die aktuelle Fassung zum Zeitpunkt des Prioritätsdatums.

Die erfindungsgemäße Lotpaste umfasst 85 bis 92 Gew.-% eines Lots auf Zinnbasis.

Der Ausdruck "Lot auf Zinnbasis" bedeutet eine Lotlegierung umfassend mindestens 80 Gew.-%, vorzugsweise mindestens 83 Gew.-%, insbesondere 85 bis 90 Gew.-% Zinn.

In einer bevorzugten Ausführungsform umfasst die Lotlegierung 0,1 bis 8 Gew.-%, vorzugsweise 0,2 bis 6 Gew.-% Silber und/oder 0,1 bis 1,5 Gew.-%, vorzugsweise 0,2 bis 1 Gew.-%, Kupfer.

Weiterhin bevorzugt ist eine Ausführungsform, in der die Lotlegierung bleifrei ist.

Besonders bevorzugt umfasst oder besteht die Lotlegierung aus Zinn sowie den vorerwähnten Mengenanteilen an Silber und Kupfer.

Es ist bevorzugt, dass die Lotlegierung eine Liquidustemperatur in einem Bereich von 200 bis 250 °C, vorzugsweise in einem Bereich von 200 bis 230 °C, aufweist.

In einer bevorzugten Ausführungsform liegt das Lot auf Zinnbasis als Lotpulver vor, vorzugsweise mit einer gewichtsmittleren Teilchengröße von 15 bis 50 µm, vorzugsweise von 20 bis 45 µm, bestimmt gemäß IPC-TM-650 2.2.14.2.

Die erfindungsgemäße Lotpaste umfasst 8 bis 15 Gew.-% eines Flussmittels. Dieses von der erfindungsgemäßen Lotpaste umfasste neue Flussmittel umfasst selber wiederum, jeweils bezogen auf sein Gesamtgewicht, i) 30 bis 50 Gew.-% einer Kombination mindestens zweier gegebenenfalls modifizierter Naturharze, ii) 5 bis 20 Gew.-% mindestens einer niedermolekularen Carbonsäure und iii) 0,4 bis 10 Gew.-% mindestens eines Amins, wobei die Kombination der gegebenenfalls modifizierten Naturharze eine integrale Molmassenverteilung aus 45 bis 70 Flächen-% im Molmassenbereich von 150 bis 550 und aus 30 bis 55 Flächen-% im Molmassenbereich von >550 bis 10000 im gemeinsamen GPC aufweist.

Das Flussmittel umfasst i) 30 bis 50 Gew.-%, bezogen auf sein Gesamtgewicht, einer Kombination (Mischung) mindestens zweier gegebenenfalls modifizierter Naturharze. Für den Fachmann bedarf es keiner Erläuterung, dass "modifiziert" für eine chemische Modifizierung steht. Bei den gegebenenfalls modifizierten Naturharzen kann es sich um unmodifizierte oder modifizierte, beispielsweise durch Hydrierung, Dimerisierung und/oder Veresterung ihrer Carboxylgruppen modifizierte Naturharze handeln. Insbesondere handelt es sich bei den Naturharzen um solche vom Kolophoniumharztyp, also um unmodifizierte oder modifizierte, beispielsweise durch Hydrierung, Dimerisierung und/oder Veresterung ihrer Carboxylgruppen modifizierte Kolophoniumharze.

Wie schon erwähnt, weist die Kombination der mindestens zwei gegebenenfalls modifizierten Naturharze eine integrale Molmassenverteilung aus 45 bis 70 Flächen-% im Molmassenbereich von 150 bis 550 und aus 30 bis 55 Flächen-% im Molmassenbereich von >550 bis 10000 im gemeinsamen GPC auf. Mit anderen Worten, die Flächen-% im Molmassenbereich von 150 bis 550 und die Flächen-% im Molmassenbereich von >550 bis 10000 addieren sich zu 100 Flächen-% der integralen Molmassenverteilung im Molmassenbereich von 150 bis 10000. Bevorzugt weist das gemeinsame GPC unterhalb einer Molmasse von 150 und oberhalb einer Molmasse von 10000 keine Signale für die mindestens zwei gegebenenfalls modifizierten Naturharze auf.

Die mindestens zwei gegebenenfalls modifizierten Naturharze besagter Kombination unterscheiden sich hinsichtlich ihrer gewichtsmittleren Molmasse M_{w}. Es handelt sich um eine Kombination aus mindestens einem gegebenenfalls modifizierten Naturharz mit einem M_{w} im Bereich von 150 bis 550 und mindestens einem gegebenenfalls modifizierten Naturharz mit einem M_{w} im Bereich von >550 bis 10000. Die gewichtsmittleren Molmassen M_{w} können in üblicher dem Fachmann bekannter Weise mittels GPC beispielsweise gemäß DIN 55672-1 (März 2016, vernetztes Polystyrol als immobile Phase, Tetrahydrofuran als flüssige Phase, Polystyrol-Standards, 23°C) bestimmt werden.

Die mindestens zwei gegebenenfalls modifizierten Naturharze besagter Kombination können sich im Übrigen hinsichtlich ihrer Säurezahl (SZ) unterscheiden. Die gegebenenfalls modifizierten Naturharze unterscheiden sich hinsichtlich ihrer gewichstmittleren Molmasse MW, beispielsweise mit einem M_{w} im Bereich von >550 bis 10000, eine Säurezahl beispielsweise im Bereich von 1 bis 50 mg KOH/g und das oder die gegebenenfalls modifizierten Naturharze mit dem niedrigeren M_{w}, beispielsweise mit einem M_{w} im Bereich von 150 bis 550, eine Säurezahl beispielsweise im Bereich von 180 bis 280 mg KOH/g haben.

Der in dieser Patentanmeldung verwendete Ausdruck "Säurezahl" bezieht sich auf eine gemäß DIN EN ISO 2114 in mg KOH/g (Milligramm KOH pro Gramm) bestimmbare Säurezahl.

Als Bestandteil ii) umfasst das Flussmittel 5 bis 20 Gew.-% mindestens einer niedermolekularen Carbonsäure ausgewählt aus der Gruppe bestehend aus Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure.

In einer Ausführungsform hat das Flussmittel der erfindungsgemäßen Lotpaste eine Säurezahl im Bereich von 85 bis 145 mg KOH/g, bezogen auf das gesamte Flussmittel. Diese Flussmittel-Gesamtsäurezahl resultiert im Wesentlichen aus den Säurebeiträgen der Bestandteile i) und ii).

Als Bestandteil iii) umfasst das Flussmittel 0,4 bis 10 Gew.-% mindestens eines Amins. Beispiele für Amine umfassen N,N,N`,N`-Tetramethylethylendiamin, N,N,N`,N`-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, , Diethylamin, Triethylamin, Cyclohexylamin, Diethanolamin, Triethanolamin, hydriertes Talg-alkylamin, hydriertes (Talg-alkyl)dimethylamin und hydriertes Bis(talg-alkyl)methylamin.

Weiterhin kann das Flussmittel gegebenenfalls ein oder mehrere Verdickungsmittel umfassen, beispielsweise in einem Mengenanteil von insgesamt 1 bis 5 Gew.-%, bevorzugt von 1,7 bis 4,5 Gew.-%. Beispiele umfassen Ethylcellulose, hydriertes Rizinusöl, Glycerin-tris-12-hydroxystearin und modifiziertes Glycerin-tris-12-hydroxystearin.

Weiterhin kann das Flussmittel gegebenenfalls ein oder mehrere organische Lösemittel umfassen, beispielsweise in einem Mengenanteil von insgesamt 32 bis 46 Gew.-%, bevorzugt von 36 bis 42 Gew.-%. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon. Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon.

Weiterhin kann das Flussmittel gegebenenfalls ein oder mehrere halogenhaltige Verbindungen umfassen, beispielsweise in einem Mengenanteil von insgesamt 0,1 bis 3 Gew.-%, vorzugsweise 0,5 bis 2 Gew.-%. Beispiele umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Vorzugsweise weist die erfindungsgemäße Lotpaste eine Viskosität von 50 bis 200 Pa s auf, bestimmt bei 23 °C und einer Scherrate von 10 s⁻¹, gemessen mit Platte-Kegel Rheometer (beispielsweise das Platte-Kegel Rheometer Physica der Firma Anton-Paar).

Ein weiterer Gegenstand der vorliegenden Erfindung ist ein Verfahren zur Herstellung der erfindungsgemäßen Lotpaste.

Dabei umfasst das Verfahren zur Herstellung der erfindungsgemäßen Lotpaste die Schritte:
- Mischen der Bestandteile des Flussmittels, insbesondere der Bestandteile i), ii) und iii); und
- Zugabe eines Lotpulvers wie vorerwähnt.

Die Zugabe des Lotpulvers erfolgt vorzugsweise in mehreren Portionen unter Rühren zu einer vorgelegten Mischung der Bestandteile des Flussmittels, im Allgemeinen ohne Erwärmen.

Die erfindungsgemäße Lotpaste kann verwendet werden zum Verbinden von elektronischen Bauteilen mit Substraten. Sie kann auch verwendet werden zur Herstellung von Lotdepots auf Substraten.

Beim Verbinden von elektronischen Bauteilen mit Substraten erfolgt die Kontaktierung der Kontaktfläche des Substrates und der Kontaktfläche des elektronischen Bauteils über die erfindungsgemäße Lotpaste.

Ein Verfahren zur Befestigung eines elektronischen Bauteils auf einem Substrat unter Verwendung der erfindungsgemäßen Lotpaste kann die folgenden Schritte umfassen:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der erfindungsgemäßen Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des Lots und anschließendes Abkühlen und Erstarren lassen des Lots unter Ausbilden einer festen Verbindung zwischen dem elektronischen Bauteil und dem Substrat.

Die Schritte a) und b) sind selbsterklärend und bedürfen keiner näheren Erläuterung.

In Schritt c) kann die erfindungsgemäße Lotpaste mittels üblicher dem Fachmann bekannter Verfahren auf eine der oder auf beide Kontaktflächen appliziert werden, beispielsweise mittels Sieb- oder Schablonendruck.

In Schritt d) können die Kontaktflächen des elektronischen Bauteils und des Substrates über die Lotpaste miteinander kontaktiert werden. Anders ausgedrückt, es kann eine Sandwichanordnung geschaffen werden aus dem elektronischen Bauteil und dem Substrat mit der Lotpaste zwischen deren Kontaktflächen.

In Schritt e) kann die Sandwichanordnung verlötet werden, indem die Lotpaste über die Liquidustemperatur des Lots erwärmt wird, so dass es zur Bildung einer festen Verbindung zwischen dem elektronischen Bauteil und dem Substrat über die Lotpaste nach anschließendem Abkühlen und Erstarren des Lots kommt. Dabei wird die Lotpaste vorzugsweise so erwärmt, dass das Lot in seine Liquidusphase übergeht, jedoch ohne dass es zu einer Schädigung der Lotpaste, des elektronischen Bauteils und/oder des Substrates kommt. Die Sandwichanordnung respektive die Lotpaste wird vorzugsweise auf eine Temperatur erwärmt, die 5 bis 60 °C, vorzugsweise 10 bis 50 °C, über der Liquidustemperatur des Lots liegt.

Elektronikmodule mit gemäß dem erfindungsgemäßen Befestigungsverfahren miteinander verlöteten elektronischen Bauteilen und Substraten weisen ein wesentlich selteneres Auftreten von Kurzschlüssen auf. Dieses wünschenswerte Verhalten ist eine Folge einer verringerten oder nicht vorhandenen Tendenz zur Elektromigration und/oder Dendritenbildung der im erfindungsgemäßen Verfahren gebildeten Lötstellen.

### Beispiele

### Angewendete Testmethoden:

### 1. Benetzungsvermögen:

Die Benetzungseigenschaften von Lotpasten wurden mit Hilfe des Aufschmelztests gemäß der IPC-TM-650 (1/95) Testmethode 2.4.45 beurteilt. Dazu wurden die zu testenden Lotpasten auf Kupferbleche (20 mm x 20 mm x 0,5 mm) aufgebracht. Sofern die Kupferbleche eine Oxidschicht auf der Oberfläche aufwiesen, wurden diese mit Schleifpapier der Körnung P600 metallisch blank geschliffen und mit Alkohol gereinigt. Kupferbleche, die eine helle und reine Oberfläche aufwiesen, wurden lediglich mit Alkohol gereinigt.

Die vorbereiteten Kupferbleche wurden mit Hilfe einer Schablone bedruckt. Dazu wurde die Schablone fest auf das Kupferblech gedrückt, so dass sich die Öffnungen der Schablone in der Mitte des Kupferblechs befanden. Die zu testende Lotpaste wurde auf einen Japanspachtel gegeben und zuerst leicht, dann mit etwas mehr Druck über die Öffnungen der Schablone gestrichen, bis sich keine Lotpaste mehr auf der Schablone befand. Dann wurde die Schablone vorsichtig unter Erhalt des durch die Schablone vorgegebenen Musters entfernt. Das bedruckte Kupferblech wurde für 2 Minuten auf eine erste mit 200 °C auf eine Temperatur unterhalb der Liquidustemperatur des Lots eingestellte Heizplatte gelegt und dann sofort auf eine zweite Heizplatte mit einer ca. 50 °C über der Liquidustemperatur des Lots liegenden Temperatur (Peaktemperatur). Nach Aufschmelzen der Lotpaste bzw. des Lots wurde das Kupferblech noch 5 Sekunden auf der Heizplatte belassen und dann davon entfernt und abgekühlt.

Nach dem Abkühlen der Lotpaste wurde beurteilt, ob diese zu Flecken aufgeschmolzen war, die der Größe der Öffnungen der Schablone entsprachen oder zu mehreren kleinen Flecken, und ob die Lotpaste nach dem Aufschmelzen scharfe Ränder aufwies. Weiterhin wurde beurteilt, ob die Oberfläche glänzend oder matt war.

Die Lotpasten wurden in vier Klassen eingeteilt, wobei die Klassen 1 und 2 als befriedigende Ergebnisse eingestuft wurden, während die Klassen 3 und 4 ungenügende Ergebnisse repräsentierten:
Klasse 1: Die umgeschmolzene Fläche war größer als die zuvor mit Lotpaste bedruckte Fläche.
Klasse 2: Die umgeschmolzene Fläche entsprach der zuvor mit Lotpaste bedruckten Fläche.
Klasse 3: Die umgeschmolzene Fläche war kleiner als die zuvor mit Lotpaste bedruckte Fläche (leichte Entnetzung zu erkennen).
Klasse 4: Die Lotpaste hatte eine oder mehrere Lotkugeln gebildet und das Kupferblech nicht benetzt oder war nicht vollständig aufgeschmolzen.

### 2. SIR-Test (Surface Insulation Resistance), Korrosionsverhalten von Lötstellen

Testmethode gemäß J-STD-004B: 2011 mit folgenden Abänderungen:
- Leiterplatte gemäß IPC-B-24 mit 200 µm Linienbreite und 200 µm Abstand zwischen den Linien,
- Klima: 65°C / 93 % relative Luftfeuchte,
- 100 V Korrosionsspannung, 100 V Messspannung, Messfrequenz 60 Minuten
- Testdauer 1000 h

Für die Auswertung der SIR-Tests wurden zwei Kriterien herangezogen:
Kriterium 1 (visuell feststellbare Dendritenbildung): Bei der lichtmikroskopischen Betrachtung bei 25-facher Vergrößerung wurde visuell geprüft, ob sich im Bereich der beloteten SIR-Leiterbahnen Dendriten gebildet hatten oder nicht.
Kriterium 2 (stündliche Prüfung auf unerwünschte Unterschreitung eines ein Stabilitätskriterium darstellenden Widerstandes von > 100 MΩ): Über einen Gesamtzeitraum von 1000 h wurden stündlich Widerstandsmessungen durchgeführt. Das Ergebnis des SIR-Tests wurde als stabil bewertet, wenn alle über den Zeitraum gemessenen Widerstände >100 MΩ lagen. Hingegen wurde das Ergebnis des SIR-Tests als instabil bewertet, wenn ein oder mehrere der 1000 Messwerte bei ≤ 100 MΩ lagen.

Tabelle 1 zeigt die Flussmittelzusammensetzung von Vergleichslotpasten 1 bis 6 und erfindungsgemäßen Lotpasten 7 bis 13. Die Angaben beziehen sich jeweils auf Gew.-%. Jeweils 11 Gew.-Teile dieser Flussmittel wurden mit jeweils 89 Gew.-Teilen Lotpulver (SnAgCu: Sn 96,5 Gew.-%, Ag 3,0 Gew.-%, Cu 0,5 Gew.-%, Typ 3 gemäß der Norm IPC J-STD-006) zu Lotpasten vermischt. Die Eigenschaften der Lotpasten wurden nach den oben beschriebenen Verfahren bestimmt und sind ebenfalls in Tabelle 1 zusammengefasst.

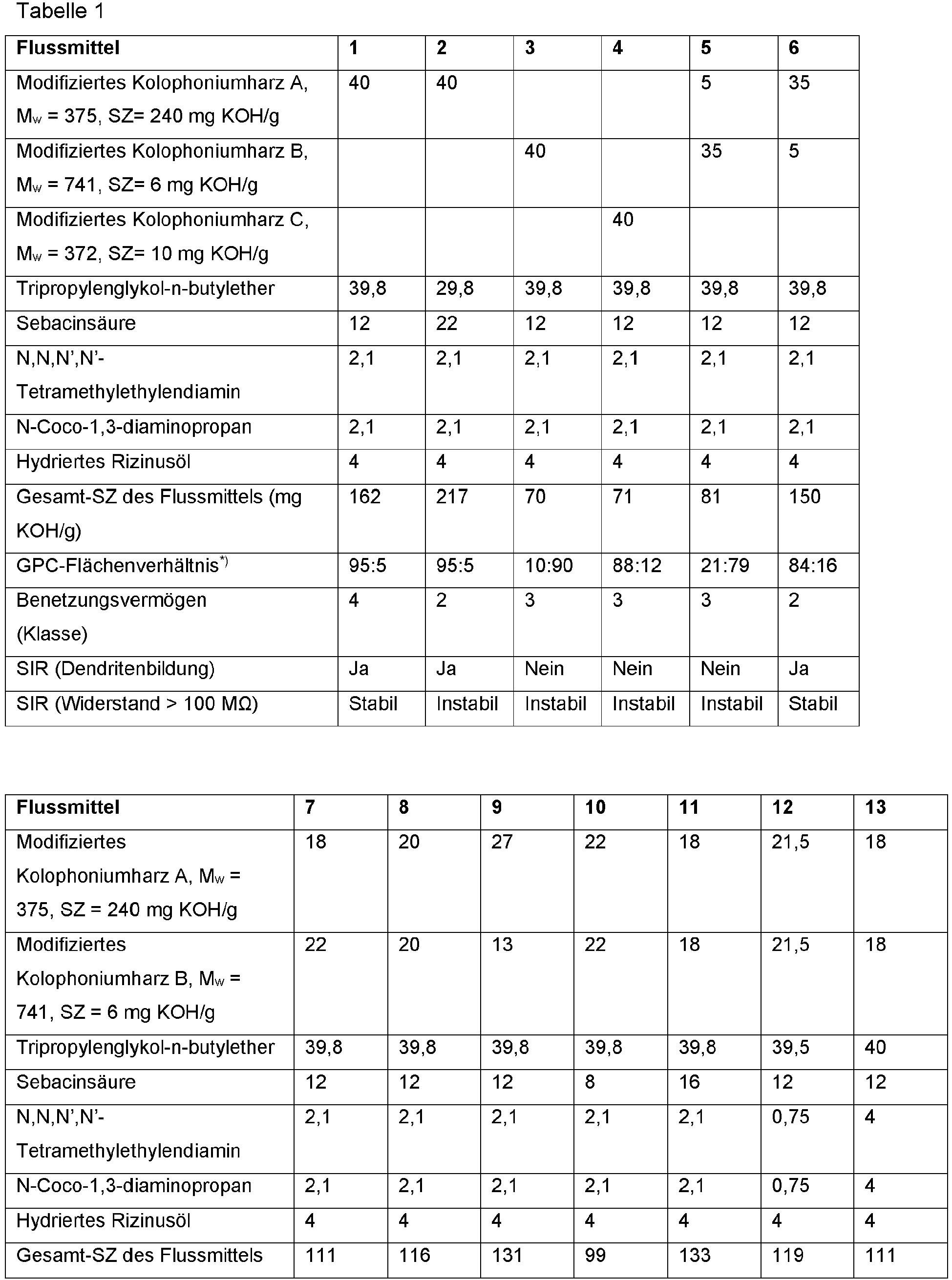

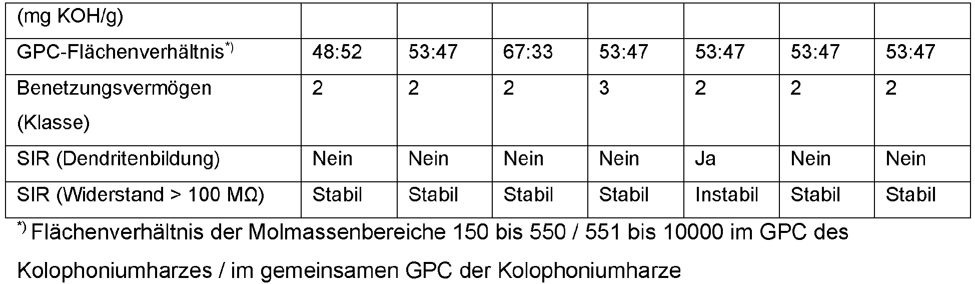

## Patentansprüche

1. Lotpaste bestehend aus 85 bis 92 Gew.-% eines Lots auf Zinnbasis und 8 bis 15 Gew.-% eines Flussmittels, wobei das Flussmittel
i) 30 bis 50 Gew.-%, bezogen auf sein Gesamtgewicht, einer Kombination mindestens zweier gegebenenfalls modifizierter Naturharze,
ii) 5 bis 20 Gew.-%, bezogen auf sein Gesamtgewicht, mindestens einer niedermolekularen Carbonsäure; und
iii) 0,4 bis 10 Gew.-%, bezogen auf sein Gesamtgewicht, mindestens eines Amins umfasst,
wobei die Kombination der gegebenenfalls modifizierten Naturharze eine integrale Molmassenverteilung aus 45 bis 70 Flächen-% im Molmassenbereich von 150 bis 550 und aus 30 bis 55 Flächen-% im Molmassenbereich von >550 bis 10000 im gemeinsamen GPC aufweist,
wobei das Lot eine mindestens 80 Gew.-% Zinn umfassende Lotlegierung ist,
wobei die mindestens eine niedermolekulare Carbonsäure ausgewählt ist aus der Gruppe bestehend aus Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure, und
wobei die mindestens zwei gegebenenfalls modifizierten Naturharze sich hinsichtlich ihrer gewichtsmittleren Molmasse M_{w} unterscheiden, wobei die Molmassenverteilung des Naturharzes nach dem in der Beschreibung beschriebenen Verfahren bestimmt wird.

2. Lotpaste nach Anspruch 1, wobei die Lotlegierung eine Liquidustemperatur in einem Bereich von 200 bis 250 °C aufweist.

3. Lotpaste nach einem der vorhergehenden Ansprüche, wobei es sich bei den gegebenenfalls modifizierten Naturharzen um unmodifizierte oder durch Hydrierung, Dimerisierung und/oder Veresterung ihrer Carboxylgruppen modifizierte Naturharze handelt.

4. Lotpaste nach einem der vorhergehenden Ansprüche, wobei das gemeinsame GPC unterhalb einer Molmasse von 150 und oberhalb einer Molmasse von 10000 keine Signale für die mindestens zwei gegebenenfalls modifizierten Naturharze aufweist.

5. Lotpaste nach einem der vorhergehenden Ansprüche, wobei es sich um eine Kombination aus mindestens einem gegebenenfalls modifizierten Naturharz mit einem M_{w} im Bereich von 150 bis 550 und mindestens einem gegebenenfalls modifizierten Naturharz mit einem M_{w} im Bereich von >550 bis 10000 handelt.

6. Lotpaste nach einem der vorhergehenden Ansprüche, wobei sich die mindestens zwei gegebenenfalls modifizierten Naturharze hinsichtlich ihrer Säurezahl unterscheiden.

7. Lotpaste nach Anspruch 6, wobei das oder die gegebenenfalls modifizierten Naturharze mit dem höheren M_{w} eine Säurezahl im Bereich von 1 bis 50 mg KOH/g und das oder die gegebenenfalls modifizierten Naturharze mit dem niedrigeren M_{w} eine Säurezahl im Bereich von 180 bis 280 mg KOH/g haben.

8. Lotpaste nach einem der vorhergehenden Ansprüche, wobei das Flussmittel eine Säurezahl im Bereich von 85 bis 145 mg KOH/g, bezogen auf das gesamte Flussmittel hat.

9. Lotpaste nach einem der vorhergehenden Ansprüche, wobei das mindestens eine Amin ausgewählt ist aus der Gruppe bestehend aus N,N,N',N'-Tetramethylethylendiamin, N,N,N`,N`-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, Diethylamin, Triethylamin, Cyclohexylamin, Diethanolamin, Triethanolamin, hydriertem Talg-alkylamin, hydriertem (Talg-alkyl)dimethylamin und hydriertem Bis(talg-alkyl)methylamin.

10. Lotpaste nach einem der vorhergehenden Ansprüche, wobei das Flussmittel 1 bis 5 Gew.% eines oder mehrerer Verdickungsmittel und/oder 32 bis 46 Gew.-% eines oder mehrerer organischer Lösemittel und/oder 0,1 bis 3 Gew.-% einer oder mehrerer halogenhaltiger Verbindungen umfasst.

11. Verwendung einer Lotpaste nach einem der vorhergehenden Ansprüche zum Verbinden von elektronischen Bauteilen mit Substraten oder zur Herstellung von Lotdepots auf Substraten.

12. Verfahren zur Befestigung eines elektronischen Bauteils auf einem Substrat unter Verwendung einer Lotpaste nach einem der Ansprüche 1 bis 10, umfassend die folgenden Schritte:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der erfindungsgemäßen Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des Lots und anschließendes Abkühlen und Erstarren lassen des Lots unter Ausbilden einer festen Verbindung zwischen dem elektronischen Bauteil und dem Substrat.

## Claims

1. A solder paste consisting of 85 to 92 % by weight of a tin-based solder and 8 to 15 % by weight of a flux, wherein the flux comprises
i) 30 to 50 % by weight, based on its total weight, of a combination of at least two optionally modified natural resins,
ii) 5 to 20 % by weight, based on its total weight, of at least one low-molecular weight carboxylic acid; and iii) 0.4 to 10 % by weight, based on its total weight, of at least one amine,
wherein the combination of the optionally modified natural resins has an integral molar mass distribution of 45 to 70 % by area in the molar mass range of 150 to 550 and of 30 to 55 % by area in the molar mass range of >550 to 10,000 in the combined GPC,
wherein the solder is a soldering alloy comprising at least 80 % by weight of tin,
wherein the at least one low-molecular weight carboxylic acid is selected from the group consisting of oxalic acid, adipic acid, malonic acid, succinic acid, glutaric acid, pimelic acid, suberic acid, azelaic acid, sebacic acid, undecanedioic acid, dodecanedioic acid and tridecanedioic acid, and wherein the at least two optionally modified natural resins differ with respect to their weight-average molar mass M_{w}, wherein the molar mass distribution of the natural resin is determined according to the method described in the description.

2. The solder paste according to claim 1, wherein the soldering alloy has a liquidus temperature in a range of 200 to 250 °C.

3. The solder paste according to any of the preceding claims, wherein the optionally modified natural resins are unmodified natural resins or natural resins modified by hydrogenation, dimerization and/or esterification of their carboxyl groups.

4. The solder paste according to any of the preceding claims, wherein the combined GPC has no signals for the at least two optionally modified natural resins below a molecular weight of 150 and above a molecular weight of 10,000.

5. The solder paste according to any of the preceding claims, wherein it is a combination of at least one optionally modified natural resin having an M_{w} in the range of 150 to 550 and at least one optionally modified natural resin having an M_{w} in the range of >550 to 10,000.

6. The solder paste according to any of the preceding claims, wherein the at least two optionally modified natural resins differ with respect to their acid number.

7. The solder paste according to claim 6, wherein the optionally modified natural resin(s) with the higher M_{w} have an acid number in the range of 1 to 50 mg KOH/g, and the optionally modified natural resin(s) with the lower M_{w} have an acid number in the range of 180 to 280 mg KOH/g.

8. The solder paste according to any of the preceding claims, wherein the flux has an acid number in the range of 85 to 145 mg KOH/g, based on the total flux.

9. The solder paste according to any of the preceding claims, wherein the at least one amine is selected from the group consisting of N,N,N',N'-tetramethylethylenediamine, N,N,N',N'-tetraethylethylenediamine, N,N,N',N'-tetrapropylethylenediamine, N-coco-1,3-diaminopropane, 1,6-diaminohexane, 1,7-diaminoheptane, 1,8-diaminooctane, 1,9-diaminononane, and 1,10-diaminodecane, bis(2-ethylhexyl)amine, bis(2-methylhexyl)amine, diethylamine, triethylamine, cyclohexylamine, diethanolamine, triethanolamine, hydrogenated tallow alkylamine, hydrogenated (tallow alkyl)dimethylamine, and hydrogenated bis(tallow alkyl)methylamine.

10. The solder paste according to any of the preceding claims, wherein the flux comprises 1 to 5 % by weight of one or more thickeners and/or 32 to 46 % by weight of one or more organic solvents and/or 0.1 to 3 % by weight of one or more halogen-containing compounds.

11. The use of a solder paste according to any of the preceding claims for connecting electronic components to substrates or for producing solder deposits on substrates.

12. A method for attaching an electronic component to a substrate using a solder paste according to any of claims 1 to 10, comprising the following steps:
a) providing an electronic component having a contact surface,
b) providing a substrate having a contact surface,
c) providing the contact surface of the electronic component and/or the contact surface of the substrate with the solder paste according to the invention,
d) contacting the contact surface of the electronic component with the contact surface of the substrate via the solder paste; and
e) heating the solder paste to above the liquidus temperature of the solder and subsequently allowing the solder to cool and solidify, thus forming a rigid connection between the electronic component and the substrate.

## Revendications

1. Pâte de brasage constituée de 85 à 92 % en poids d'une brasure à base d'étain et de 8 à 15 % en poids d'un agent fluide, dans laquelle l'agent fluide comprend
i) 30 à 50 % en poids, par rapport à son poids total, d'une combinaison d'au moins deux résines naturelles, éventuellement modifiées,
ii) 5 à 20 % en poids, par rapport à son poids total, d'au moins un acide carboxylique de faible poids moléculaire ; et
iii) 0,4 à 10 % en poids, par rapport à son poids total, d'au moins une amine,
dans laquelle la combinaison des résines naturelles éventuellement modifiées présente une distribution de masse moléculaire intégrale de 45 à 70 % en surface dans la région des poids moléculaires de 150 à 550 et de 30 à 55 % en surface dans la région des masses moléculaires de >550 à 10 000 dans la GPC commune,
dans laquelle la brasure est un alliage de brasure comprenant au moins 80 % en poids d'étain, dans laquelle l'au moins un acide carboxylique de faible poids moléculaire est choisi dans le groupe constitué par acide oxyalique, acide adipique, acide malonique, acide succinique, acide glutarique, acide pimélique, acide subérique, acide azélaïque, acide sébacique, acide undécanedioïque, acide dodécanedioïque et acide tridécanoïque et
dans laquelle les au moins deux résines naturelles éventuellement modifiées se différencient en ce qui concerne leur masse molaire moyenne en poids M_{w}, dans laquelle la distribution de masse moléculaire des résines naturelles est déterminée selon le procédé décrit dans la description.

2. Pâte de brasage selon la revendication 1, dans laquelle l'alliage de brasure présente une température du liquidus comprise dans une plage de 200 à 250 °C.

3. Pâte de brasage selon l'une quelconque des revendications précédentes, dans laquelle les résines naturelles éventuellement modifiées sont des résines naturelles non modifiées ou modifiées par hydrogénation, dimérisation et/ou estérification de leurs groupes carboxyle.

4. Pâte de brasage selon l'une quelconque des revendications précédentes, dans laquelle la GPC commune ne présente aucun signal pour les au moins deux résines naturelles éventuellement modifiées au-dessous d'une masse molaire de 150 et au-dessus d'une masse molaire de 10 000.

5. Pâte de brasage selon l'une quelconque des revendications précédentes, dans laquelle il s'agit d'une combinaison d'au moins une résine naturelle éventuellement modifiée avec une M_{w} située dans la plage de 150 à 550 et d'au moins une résine naturelle éventuellement modifiée avec une M_{w} située dans la plage de >550 à 10 000.

6. Pâte de brasage selon l'une quelconque des revendications précédentes, dans laquelle les au moins deux résines naturelles éventuellement modifiées se différencient en ce qui concerne leur indice d'acide.

7. Pâte de brasage selon la revendication 6, dans laquelle la ou les résines naturelles éventuellement modifiées avec la M_{w} supérieure ont un indice d'acide situé dans la plage de 1 à 50 mg KOH/g et la ou les résines naturelles éventuellement modifiées avec la M_{w} inférieure ont un indice d'acide situé dans la plage de 180 à 280 mg KOH/g.

8. Pâte de brasage selon l'une quelconque des revendications précédentes, dans laquelle l'agent fluide a un indice d'acide situé dans la plage de 85 à 145 mg KOH/g, par rapport à l'ensemble de l'agent fluide.

9. Pâte de brasage selon l'une quelconque des revendications précédentes, dans laquelle l'au moins une amine est choisie dans le groupe constitué par N,N,N',N'-tétraméthyléthylèndiamine, N,N,N',N'- tétraéthyléthylèndiamine, N,N,N',N'-tétrapropyléthylèndiamine, N-Coco-1,3-diaminopropane, 1,6- diaminohexane, 1,7-diaminoheptane, 1,8-diaminooctane, 1,9-diaminononane et 1,10- diaminodécane, bis(2-éthylhexyl)amine, bis(2-méthylhexyl)amine, diéthylamine, triéthylamine, cyclohexylamine, diéthanolamine, triéthanolamine, amine alkyle de suif hydrogénée, diméthylamine (alkyle de suif) hydrogénée et bis(alkyle de suif)méthylamine hydrogénée.

10. Pâte de brasage selon l'une quelconque des revendications précédentes, dans laquelle l'agent fluide comprend 1 à 5 % en poids d'un ou plusieurs agents épaississants et/ou 32 à 46 % en poids d'un ou plusieurs solvants organiques et/ou 0,1 à 3 % en poids d'un ou plusieurs composés halogénés.

11. Utilisation d'une pâte de brasage selon l'une quelconque des revendications précédentes pour la liaison de composants électroniques avec des substrats ou pour la fabrication de dépôts de brasure sur des substrats.

12. Procédé de fixation d'un composant électronique sur un substrat en utilisant une pâte de brasage selon l'une quelconque des revendications 1 à 10, comprenant les étapes suivantes :
a) fourniture d'un composant électronique avec une surface de contact,
b) fourniture d'un substrat avec une surface de contact,
c) équipement de la surface de contact du composant électronique et/ou de la surface de contact du substrat avec la pâte de brasage selon l'invention,
d) mise en contact de la surface de contact du composant électronique avec la surface de contact du substrat par le biais de la pâte de brasage ; et
e) chauffage de la pâte de brasage au-dessus de la température du liquidus de la brasure, puis refroidissement et solidification de la brasure en formant une liaison solide entre le composant électronique et le substrat.
